# EUROPEAN PATENT SPECIFICATION

(11) **EP 1 457 882 B1**
(45) Date of publication and mention of the grant of the patent: **05.06.2019**
(21) Application number: 03005712.9
(22) Date of filing: 13.03.2003
(51) Int. Cl.: G06F 9/54

(54) **Method and computer system for enabling flexible request-response cycles**
Verfahren und Rechnersystem zur Ermöglichung von flexiblen Anfrage-Antwortzyklen
Méthode et système d'ordinateur pour rendre possible des cycles de demande-réponse flexibles

(43) Date of publication of application: 15.09.2004
(73) Proprietor: SAP SE, 69190 Walldorf (DE)
(72) Inventor: Moser, Martin, 69207 Sandhausen (DE)
(74) Representative: Müller-Boré & Partner Patentanwälte PartG mbB

(56) References cited:
- EP-A- 1 156 415
- US-B1- 6 336 137
- GAMMA E ET AL: "Design Patterns, Elements of Reusable Object-Oriented Software, passage", 1 January 2000 (2000-01-01), DESIGN PATTERNS : ELEMENTS OF REUSABLE OBJECT-ORIENTED SOFTWARE; [ADDISON-WESLEY PROFESSIONAL COMPUTING SERIES], ADDISON-WESLEY, BOSTON, MASS. [U.A.], PAGE(S) 1 - 31, XP002448113, ISBN: 978-0-201-63361-0 & GAMMA E ET AL: "Design Patterns. Elements of Reusable Object-Oriented Software", DESIGN PATTERNS. ELEMENTS OF REUSABLE OBJECT-ORIENTED SOFTWARE, XX, XX, 31 March 1995 (1995-03-31), pages 293-303, XP002460182,

## Description

### Field of the Invention

The present invention generally relates to electronic data processing, and more particularly, relates to methods, computer program products and systems for event handling.

### Background of the Invention

Some software applications can be accessed by a user using a conventional Web browser, such as the Microsoft Internet Explorer. Typically, such applications provide a plurality of pages. A page includes relevant information for a graphical user interface (GUI) through which the user can interact with the application. The page can include multiple components. The page is typically generated on a server and then transmitted to a client. At the client, the page is visualized for a user by the browser. When the user interacts with the client via the GUI to refresh the page, the whole process is repeated. Communication between the server and the client uses the HTTP protocol (Hypertext Transfer Protocol). The HTTP protocol is an asymmetric protocol in the sense that only the client can play an active role in the communication. That is, the client sends a request to the server and the server responds to the client. However, the server cannot call the client without a corresponding previous request from the client. Therefore, the server can only send data to a component on the client when having received a request of the component earlier.

EP 1 156 415 A2 discloses server-side control objects for processing client-side user interface elements for display on a web page.

It is the object of the invention to provide a method for event handling on a client, method for event handling on a server, a client, a server and a computer program product enabling an improved client-server communication.

This object is fulfilled by a method for event handling on a client having the features disclosed in claim 1, method for event handling on a server having the features disclosed in claim 11, a client having the features disclosed in claim 22, a server having the features disclosed in claim 30 and a computer program product having the features disclosed in claims 35 or 36. Preferred embodiments are defined in the dependent subclaims.

In the following, the term "embodiment" is to be understood as "example", or "aspect", unless it is directed to combinations of features defined in the claims.

### Summary of the Invention

Therefore, the present invention provides methods, computer program products and computer systems as described by the independent claims to allow a server to play a more active role in client-server communication.

To meet this objective, in one embodiment of the present invention a client-side event handling method is provided, where a client runs a browser to access an application that is running on a server of a computer system. The client and the server communicate over an asymmetric protocol. The browser sends a request to the application. The request includes a browser component request that originates in a first browser component. In response to the request the browser receives a server response from the application. The server response includes a first application component response that is directed to the first browser component and a second application component response that is directed to a second browser component. A further browser component generates a further browser component request in response to a client event generated by the first browser component.

In a further embodiment a server-side event handling method is provided, where a server runs an application that is accessed by a browser running on a client. The client and the server communicate over an asymmetric protocol. The application receives a request from the browser. The request includes a browser component request that originates in a first browser component (BC1). In response to the request the application sends a server response to the browser. The server response includes a first application component response that is applicable to the first browser component and a second application component response that is applicable to a second browser component. A further browser component generates a further browser component request in response to the browser component request.

In response to the request of the client, the server can include information in the server response that addresses other recipients than the original requestor and that goes beyond what was originally requested by the client.

The aspects of the invention will be realized and attained by means of the elements and combinations particularly pointed out in the appended claims. Also, the described combination of the features of the invention is not be understood as a limitation, and all the features can be combined in other constellations. It is to be understood that both, the foregoing general description and the following detailed description are exemplary and explanatory only.

### Brief Description of the Drawings

- FIG. 1: is a simplified block diagram of a computer system that can be used with an embodiment of the present invention to enable a flexible request-response cycle;
- FIG. 2: shows a simplified graphical user interface of an application generated by a browser according to the present invention at two consecutive time points;
- FIG. 3: illustrates the use of a request queue and a response queue in the computer system;
- FIG. 4: illustrates request and response bundling in the computer system;
- FIG. 5: shows a further version of the graphical user interface of the application according to the present invention at two consecutive time points;
- FIG. 6: shows an example of a timeline of the flexible request-response cycle;
- FIG. 7A: is a simplified flowchart of a client method for enabling the flexible request-response cycle; and
- FIG. 7B: is a simplified flowchart of a server method for enabling the flexible request-response cycle.

### Detailed Description of the Invention

The same reference numbers are used throughout the drawings to refer to the same or like parts.

Definitions of terms, as used herein after:

### Client:

A client is a computer device configured to access a service that, for example, is provided by a software application. Typically, clients for accessing Web applications run Web browsers such as Netscape Navigator running on a PC, Pocket Internet Explorer running on a PDA, or a WAP browser running on a cell phone.

### Server:

A server is a computer device that is running the application which is accessed by the client.

### Page:

A page includes content (layout and data) that defines a graphical user interface of a Web application (see definition below). A page typically is rendered on the server into a browser compatible format, such as HTML or WML.

### Component:

A component is a basic building block of a page. The component exists within a page. A component can include further components. According to the invention a component has a server-side portion that will be referred to as "application component". The application component exists on the server that runs the corresponding application. This allows to have a stateless server because the application component can exist for a limited time interval only and receive necessary state information from a client. The component also has a client-side portion that will be referred to as "browser component". The browser component holds the state of the , corresponding component.

### Web Application:

A Web application includes a set of pages. One specific feature of a Web application is that it keeps no state at the server. In other words, for each request the server receives it creates the state of the accessed Web application from scratch. After the Web application has generated an output, usually the state is discarded.

### Flexible request-response cycle:

In a flexible request-response cycle, a server receiving a request from a client is able to address the requesting component as well as further, non-requesting components in its server response. Further, the server can include more information in its server response than originally has been requested.

### Document object model:

According to the corresponding W3C definition, the Document Object Model (DOM) provides a mechanism to access and manipulate parsed HTML and XML content.

### Client framework:

A client framework (e.g., a JavaScript framework or Visual Basic Script framework) is an environment for browser components that provides basic services, such as event distribution via a client (event) broker, component instantiation and component destruction, and server communication. Further, the client framework may offer base classes that define functions for causing events on a client or server and for queuing client events.

### Server framework:

In analogy to the client framework, a server framework is an environment for the server-side portion of components (application components) providing basic services, such as event distribution using a server (event) broker, component instantiation and component destruction. Further, the server framework may offer base classes for the application components defining functions for firing server events. However, complementary to the client framework, the server framework offers functionality for collecting results of server events. Further, the server framework provides queuing for server events and for server event results.

### Broker:

A broker, as known by those skilled in the art, can be implemented as a component that receives messages from any component and broadcasts each message to any other component.

### Thread:

A part of a program that can execute independently of other parts. A thread, as known by those skilled in the art, is a "lightweight" process in the sense that it is an independently running entity, but does not have its own memory. Rather, the thread shares memory with the process that spawned the thread, and all further threads spawned by the process.

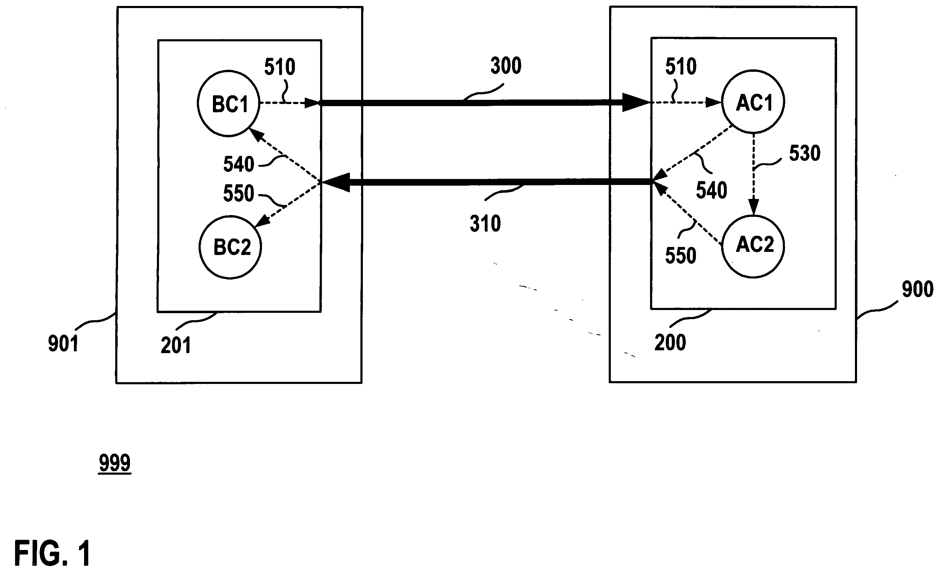

FIG. 1 illustrates a computer system 999 that can be used with an embodiment of the present invention to enable a flexible request-response cycle in client-server communication.

The computer system 999 has at least a client 901 and a server 900. The client 901 and further clients can communicate with the server 900 over a computer network, such as a local are network, (LAN), a wide area network (WAN) or the Internet by using an asymmetric communication protocol, such as the HyperText Transfer Protocol (HTTP) or File Transfer, Access and Management (FTAM) . The client 901 runs a browser 201 to access an application 200 that is running on the server 900.

The browser 201 sends a request 300 to the application 200. The request 300 includes a browser component request 510 that originates in a first browser component BC1. For example, a user of the application 200 can interact with the first browser component BC1 by performing a corresponding mouse action (e.g., pushing a button) or keyboard action (e.g., using the ENTER key) in the browser 201 that targets the first browser component BC1. This action triggers the browser component request 510, accordingly. The triggering action may also be performed by another client or server instead of the user.

The application 200 has a first application component AC1 that corresponds to the first browser component BC1. The browser component request 510 is directed to the first application component AC1. In response to the browser component request 510 the first application component AC1 generates a first application component response 540. Further, the first application component AC1 can trigger one or more server events 530 in response to the request 300. The server event 530 can be part of an event cascade that includes multiple server events that are all directly or indirectly triggered in response to the request 300 and are processed by further application components. In response to the server event 530 a second application component AC2 generates a second application component response 550.

Then, the application 200 answers the request 300 with a server response 310 that includes the first application component response 540 directed to the first browser component BC1 and the second application component response 550 directed to a second browser component BC2. The second browser component BC2 corresponds to the second application component AC2.

After having received the server response 310, the browser 201 applies the first application component response 540 and the second application component response 550 to the first browser component BC1 and the second browser component BC2, respectively.

It is an effect of the present invention that the second browser component BC2 receives an application component response from the server 900 although it did not send a corresponding browser component request before. In other words, the described flexible request-response cycle allows a server to address browser components that did not initiate the client-server communication through a corresponding browser component request. This allows the server to play a more active role than in prior art client-server communication where the server can only address the browser component that initiates the communication. The server uses dependencies that are defined by the application 200 for launching a server event cascade. The application 200 determines which browser components on the client 901 are affected by the server event cascade and sends the corresponding application component responses to the browser 201.

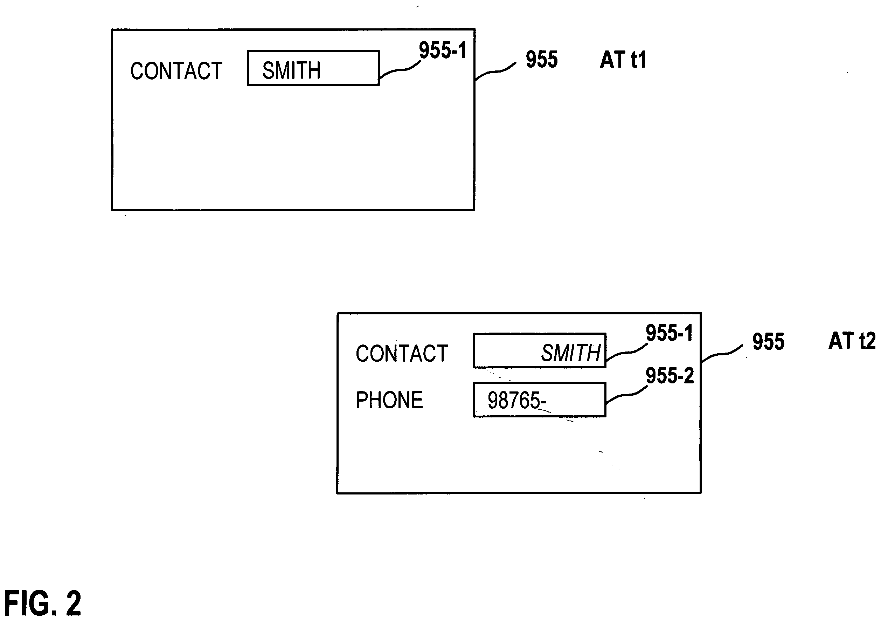

FIG. 2 illustrates an example of a graphical user interface (GUI) 955 of an application (e.g., application 200; cf. FIG. 1) that can be generated by the browser 201 (cf. FIG. 1) according to the present invention at two consecutive time points t1, t2. The GUI example is exemplary and explanatory only and any user interface, such as a voice driven user interface, for any application may be generated by making use of the spirit of the present invention.

The GUI 955 can be part of an application that is used in a system, such as a customer relationship management (CRM) system or an enterprise resource planning (ERP) system.

At t1, a user of the application enters (e.g., by using a conventional keyboard or a microphone) the name of a contact person for a company whose address data is already known by the application because, for example, it was selected on a previous page of the application. The user uses a contact user interface (UI) element 955-1. For example, the contact UI element 955-1 can be a corresponding input field that allows the user to enter the contact person's name "SMITH" in a horizontally left aligned entry mode. Referring back to FIG. 1, the contact UI element 955-1 relates to the first browser component BC1.

The user can confirm the entry by using, for example, the RETURN key of a conventional keyboard. Another option for confirming the entry is to use a corresponding SUBMIT-, OK- or CONFIRM button which can be implemented as a further UI element of the GUI 955. In a voice driven UI a specific sound or word sequence might be used for confirming. Referring back to FIG. 1, the confirmation triggers the browser component request 510 that is included in the request 300.

At t2, the display of the contact UI element 955-1 is changed to visualize for the user that the entry was accepted by the system. For example, the font can be changed to an italics font and/or the horizontal alignment of the name "SMITH" is changed from left to right. Referring back to FIG. 1, the change in visualization of the contact UI element 955-1 is the result of applying the first application component response 540 to the first browser component BC1. The information about the changes is generated between t1 and t2 by the first application component AC1 in response to the browser component request 510, which is included in the server response 310. For example, AC1 stores the contact name "SMITH" in a database and generates specific confirmation layout information.

Further, at t2, the browser prompts the user with a phone UI element 955-2 to enter a phone number for the contact person. In the example, the phone UI element 955-2 is not visible at t1. Referring back to FIG. 1, the phone UI element 955-2 relates to the second browser component BC2.

Between t1 and t2, the application 200 determines a dialling prefix for the phone number and submits it to the phone UI element 955-2 where it is visualized for the user. Referring back to FIG. 1, the first application component AC1 for handling the contact person's name can trigger the server event 530 without having any knowledge about any further application component. When the second application component AC2 receives the server event 530 it provides the corresponding dialling prefix to the browser 201. For example, the second application component AC2 uses the ZIP code of the company's address data to look up the corresponding dialling prefix in an appropriate lookup table. AC2 then generates the second application component response 550 that includes the dialling prefix which is also included in the server response 310.

Once the browser 201 has received the server response 310 it applies the first application component response 540 to the first browser component BC1 (contact UI element) and the second application component response 550 to the second browser component BC1 (phone UI element). For example, the second browser component BC2 is already part of the current document object model (DOM) stored in a specific portion of a browser memory of the browser but it is flagged invisible. When the browser applies the second application component response 550 to BC2 it changes, for example, the corresponding visible attribute so that the phone UI element becomes visible for the user. Further the browser inserts the dialling prefix in BC2 as a default value.

Then the user can complete the phone number by simply adding the phone number extension of the contact person "SMITH".

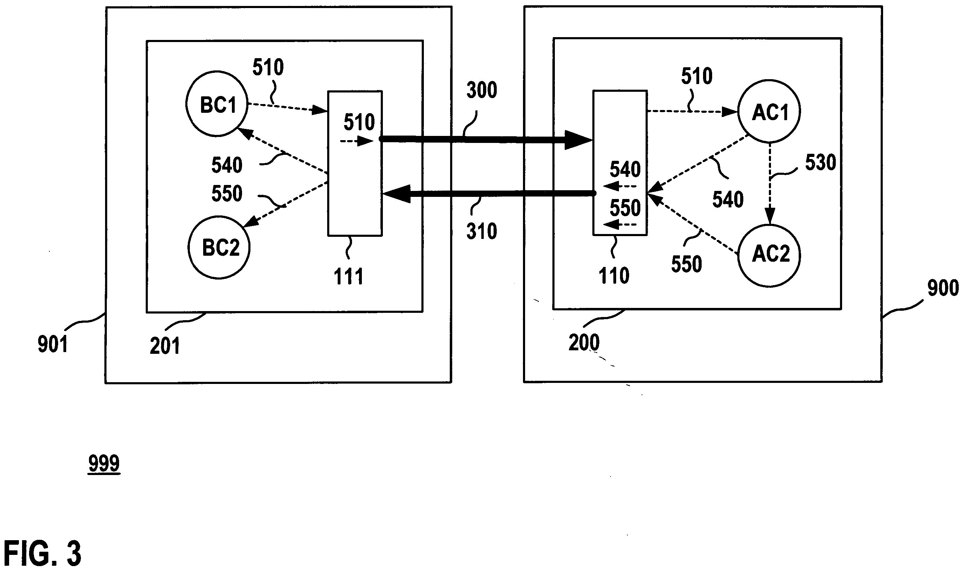

FIG. 3 illustrates an example of response bundling in the computer system 999 in one embodiment of the invention.

In this embodiment the browser 201 has a request queue 111 for buffering browser component requests (e.g., browser component request 510). For example, the request queue can be implemented as a further specific portion of the browser memory. Once the request 300 is sent to the application, the request queue 111 can be cleared.

At the server 900, the application 200 has a response queue 110 for buffering application component responses. The response queue can be implemented as a specific portion of server application memory. The response queue can also serve as a buffer, for the incoming request 300 but also a separate server side request queue may be used instead. The included browser component request 510 is then dispatched to the corresponding application component AC1. Then the first application component response 540 and the second application component response 550 are buffered in the response queue 110. This allows to bundle in a single server response (e.g., server response 310) all application component responses that result from a server event cascade triggered by the request 300. Once the server response 310 is sent to the browser, the response queue can be cleared.

At the client side, the request queue 111 can also serve as a buffer for the incoming response 310 but also a separate client side response queue may be used instead. The browser unpacks all application component responses 540, 550 that are included in the server response 310 and applies them to the corresponding browser components BC1, BC2, for example, by modifying the DOM accordingly.

Those skilled in the art can use a broadcasting architecture for implementing this embodiment. For example, the client 901 has a client framework that includes a client broker. For example, the client framework is a JavaScript framework. In the case of using the JavaScript framework one client thread can run at the client at a given time. Other frameworks may support multiple client threads. When the user interacts with the browser 201 as described under FIG. 2, the interaction causes a corresponding client thread to run through all browser components BC1, BC2. Once the client thread has run through the browser component affected by the interaction (e.g., first browser component BC1), the client thread is returned to the client broker (e.g., the affected browser component raises a corresponding client event that is posted to a client event queue). The client broker directs the client thread to the next browser component (e.g., second browser component BC2), for example by retrieving the client event from the client event queue and distributing it to further browser components.

In the example of FIG. 3, once the client thread has passed the first browser component BC1, the browser component request 510 is buffered in the request queue 111 and the client thread is returned to the client broker. The client broker directs the client thread to the second browser component BC2 from where it is returned again to the client broker. Once the client broker becomes aware that all browser components have been taken into account by the client thread, the client broker notifies the request queue 111 to send the request 300. Then, the request queue 111 can be cleared.

The server 900 has a server framework that functions similar to the client framework. In one server framework implementation a server process or thread is started when the request 300 is received by the server 900. For example, the server process/thread is running through all application components under the control of a server broker. An application component (e.g., AC1) that generates an application component response when being passed by the server process/thread sends its response to the response queue 110. In case an application component AC1 generates a server event 530, the server event 530 can be buffered in a server event queue. Before the server response 310 is sent to the client 901, the server broker makes sure that all application components have been taken into account by the server process/thread and that all server events that were buffered in the server event queue have been processed by any application component' showing an interest in the server events. Then, the' server broker notifies the response queue 110 to send the server response 310. Then, the response queue 110 can be cleared.

In an implementation example, the client framework can offer functions to fire client events and browser component requests. The functions can be implemented within the base class of browser components. In the following some function examples are explained.

### Function fireClientEvent(Object source, Object parameters):

When this function is called, a client event can be stored in a client event-queue. Then, the client broker distributes the event to all browser components.

### Function fireBrowserComponentRequest(Object source, Object parameters):

When this function is called, a browser component request is stored in the request queue 111.

### Function flushRequestQueue():

The client broker calls this function, when the event distribution at the client-side has come to an end, that is, all client events raised by browser components, and further client events caused by these client events have been distributed accordingly.

This function further bundles browser component requests in the request queue 111 into the request 300, and sends the request 300 to the server 900 and clears the request queue 111.

In analogy, the server framework at the server 900 can offer the following functions:

### Function fireApplicationComponentResponse(Object source, Object parameters)

When this function is called, an application component response is stored in the server response queue 110.

### Function fireServerEvent(Object source, Object parameters)

When this function is called, a server event is posted into the server event queue. Then, the server broker distributes the server event to all application components.

### Function flushResponseQueue()

The server broker calls this function when the server event distribution at the server has come to an end, that is, all server events raised by application components and further server events caused by these events have been distributed. This function bundles the application component responses in the server response queue 110 into the server response 310, sends the response 310 to the client and clears the server response queue.

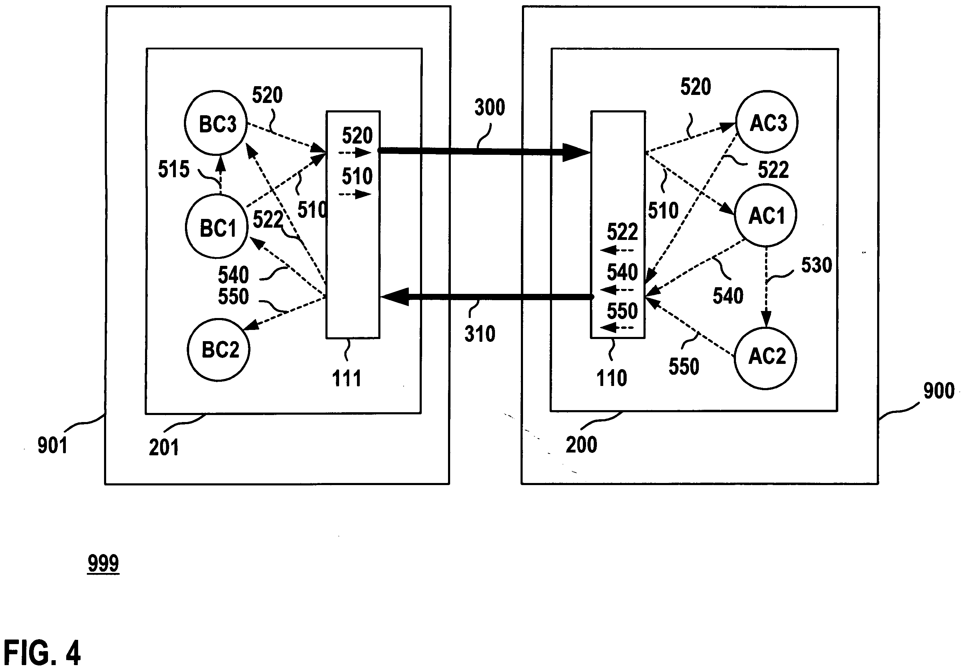

FIG. 4 illustrates an example of request and response bundling in the computer system 999 in one embodiment of the invention.

This example is based on the examples of FIG. 1 and FIG. 3 and in addition shows a further browser component BC3 and a corresponding further application component AC3.

Once the triggering action for the browser component request 510 has been performed, the first browser component further generates a client event 515. For convenience of explanation, in the drawing the client event 515 is directed to the further browser component BC3, although the client event is distributed to any browser component. In response to the client event 515 the further browser component BC3 generates a further browser component request 520. In the example, BC2 is not interested in the client event 515 and, therefore, ignores it. The client event 515 can be part of a client event cascade that is triggered by the triggering action and includes further client events that may affect further browser components. The browser 201 buffers all browser component requests (e.g., the browser component request 510 and the further browser component request 520) that are directly or indirectly caused by the triggering action in the request queue 111. The browser component requests 510, 520 are then bundled in the request 300. After the request 300 has been sent to the application 200, the request queue 111 can be cleared.

In case of a client framework implementation as described under FIG. 3, a client event queue can be used to buffer client events once they are generated by browser components. The client broker ensures that all client events in the client event queue have been distributed to and processed by one or more corresponding browser components showing interest in the client events before the request 300 is sent.

Once the application 200 has received the request 300 (as described in the example of FIG. 3) the application unpacks the request 300 into the browser component request 510 and the further browser component request 520 and dispatches them to the first application component AC1 and the further application component AC3, respectively. The subsequent behaviour of the first and second browser components AC1, AC2 is already described in the examples of FIGS. 1, 3. For convenience of explanation, in the drawing the server event 530 is directed to the second application component AC2, although the sever event is distributed to any application component.

The further application component AC3 generates a further application component response 522 that is directed to the further browser component BC3 in response to the further browser component request 520. The further application component response 522 is then buffered in the response queue 110 and bundled together with the first and second application component responses 540, 550 into the server response 310. Once the server response 310 has been sent to the browser 201, the response queue 110 can be cleared.

Then, the browser 201 unpacks the server response 310 and dispatches the included application component responses 522, 540, 550 to be applied to the corresponding browser components BC3, BC1, BC2, respectively.

This example shows that the present invention can be used with components interacting through events. This includes server event cascades in the case of application components as well as client event cascades in the case of browser components. The components do not need to know each other. For example, AC1 does not need to know AC3. That is, AC1 does not need to know any of AC3's interfaces or even about the existence of AC3 because any event is distributed automatically to any component showing interest in a corresponding client event (e.g., by using the broadcasting mechanism with or without component registration or an equivalent mechanism).

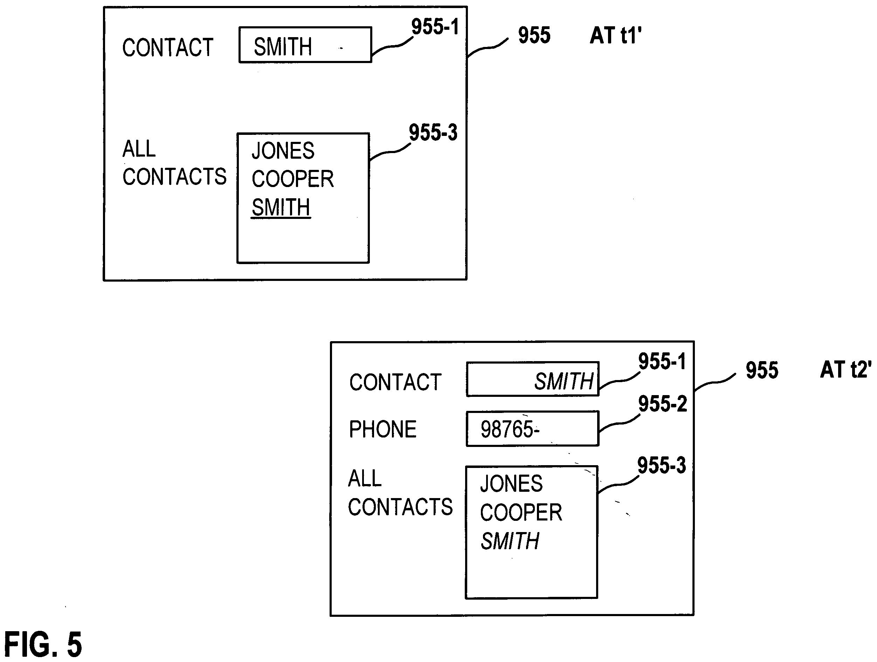

FIG. 5 shows a further version of the graphical user interface 955 of the application according to the present invention at two consecutive time points t1', t2'.

The function and behaviour of the contact GUI element 955-1 and the phone GUI element 955-1 at t1' and t2' is equivalent to what is described in FIG. 2 at t1 and t2. In addition to that, the GUI has a contact list GUI element 955-3 at t1'. The contact list GUI element 955-3 displays all contacts that are known by the application for the company that was selected on a previous page of the application (cf. description of FIG. 2). The contact list GUI element 955-3 relates to the further browser component BC3 (cf. FIG. 4). At t1' the contact name "SMITH" has already been entered into the contact GUI element 955-1. Once the triggering action (cf. description of FIG. 2) has been performed, the first browser component BC1 sends the client event 515 to the further browser component BC3 to notify BC3 about the new contact. For example, the new contact is displayed in the corresponding contact list GUI element 955-3 in a specific format (e.g., underlined) to indicate to the user that the state of the contact list has not been updated on the server 900.

To initiate the update of the corresponding further application component AC3 (cf. FIG. 4), the further browser component BC3 generates the further browser component request 520 that includes the information that "SMITH" has to be added to the contact list of the previously selected company.

Between t1' and t2', the application receives the request 300 that includes the browser component requests 510 and 520. The further browser component request 520 is dispatched to the further application component. For example, AC3 stores the name "SMITH" for the selected company in a corresponding contact table and generates the further application component request 522 to confirm the storage. In the example of FIG. 5, the further application component request 522 includes layout information to display the added contact "SMITH" in the contact list element 955-3 using an italics font.

This is achieved by the browser 201 applying the further application component response 522 to the further browser component BC3 (e.g., by changing the font attribute of BC3 in the DOM).

At t2' the user of the application can see that the new contact is now stored in the application 200 and added to the contact list table. The user can now enter the contact person's phone number as described under FIG. 2.

It is an effect of the invention that browser components can influence each other through client events (e.g., client event cascade) leading to multiple browser component requests bundled in a single request 300. These browser component requests can be answered by multiple application components generating multiple application component responses caused by the browser component requests and further server events (e.g., server event cascade) that are caused by the browser component requests. All application component responses are bundled in a single server response 310 that affects also browser components that did not generate corresponding browser component requests before.

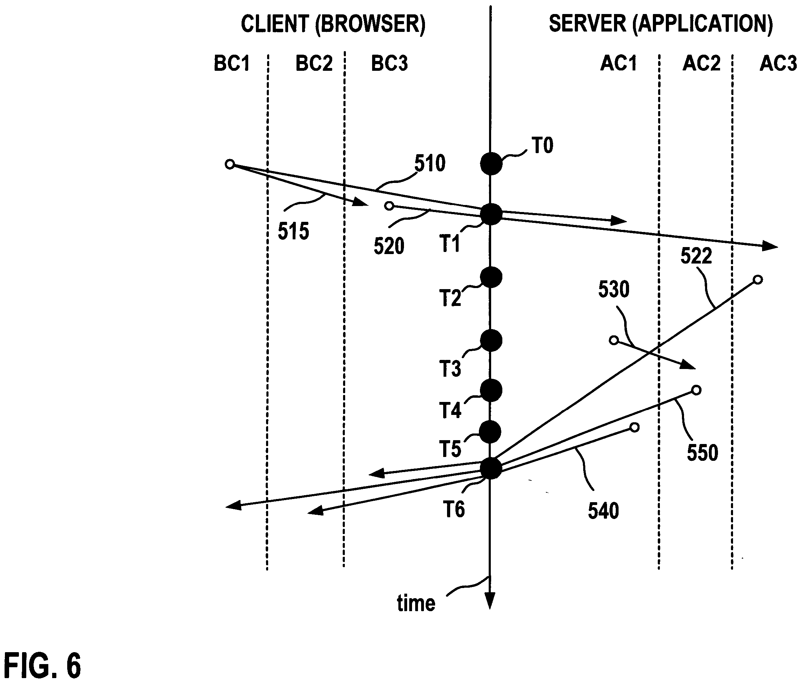

FIG. 6 shows an example of a timeline for the flexible request-response cycle. The example refers to the examples of FIGS. 4, 5. Time points T0 to T6 are illustrated by bullets on the time axis. Time increases from T0 to T6.

Left to the time axis the browser components BC1, BC2 and BC3 are separated by dashed lines. Right to the time axis the corresponding application components AC1, AC2 and AC3 are separated by dashed lines.

Arrows from one component to another illustrate signals, such as browser component requests 510, 520, client event 515, application component responses 522, 540, 550 and server event 530. The circled end of each arrow indicates the component where the signal originates, whereas the other end of the arrow indicates the component that receives the signal.

At T0, BC1 generates browser component response 510 and client event 515. In response to the client event 515, BC3 generates the further browser component response 520 between T0 and T1. Both browser component requests are buffered in the request queue 111 and bundled in the request 300 that is sent to the application 200 at T1. This is illustrated by the corresponding arrows crossing the T1 time point, which means that both browser component requests are sent simultaneously. Then, the browser component requests are unpacked and dispatched to the corresponding application components AC1 and AC3.

At T2, AC3 generates the further application component response 522, which is buffered in the response queue 110.

At T3, AC1 generates the server event 530 in response to the browser component request 510.

At T4, AC2 generates in response to the server event 530 the second application component request 550, which is buffered in the response queue 110.

At T5, AC1 generates in response to the browser component request 510 the first application component response 540, which is buffered in the response queue 110.

At T6, the application component responses in the response queue are bundled into the server response 310 that is sent to the browser. This is illustrated by the corresponding arrows crossing the T6 time point, which means that all application component responses are sent simultaneously.

After T6, the browser unpacks the application component responses and applies them to the corresponding browser components.

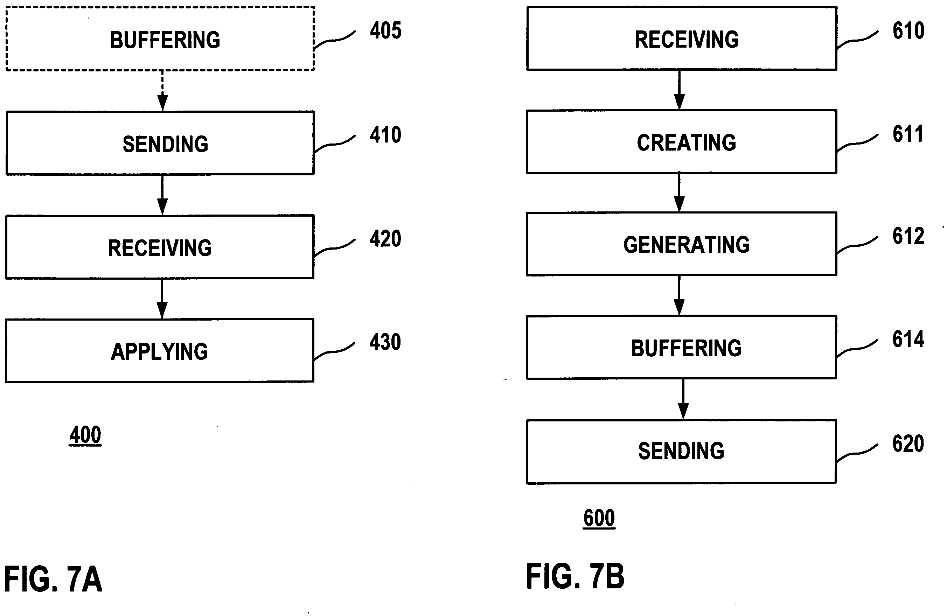

FIG. 7A is a simplified flowchart of a client-side event handling method 400 for enabling the flexible request-response cycle.

A client 901 runs a browser 201 to access an application 200 that is running on a server 900. The client and the server are part of a computer system 999 and communicate using an asymmetric protocol. The client-side method 400 includes the following steps: an optional (illustrated by a dashed frame) buffering step 405, a sending step 410, a receiving step 420 and an applying step 430.

In the optional buffering step 405, the browser stores a component request 510 in a request queue 111. The browser component request 510 originates in a first browser component BC1.

In the sending step 410, the browser 201 sends a request 300 to the application 200, wherein the request 300 comprises the browser component request 510.

In the receiving step 420, the browser 201 receives in response to the request 300 a server response 310 from the application 200. The server response 310 includes a first application component response 540 that is directed to the first browser component BC1 and a second application component response 550 that is directed to a second browser component BC2.

In the applying step 430, the browser 201 applying 430 the first application component response 540 and the second application component response 550 to the first browser component BC1 and the second browser component BC2, respectively.

One embodiment of the invention can be implemented by a computer program product that includes instructions that when loaded into a memory of the client 900 causes at least one processor of the client 900 to perform the steps of the client-side method 400. Thereby, the computer program can be implemented to support all client-side features that are described in FIGS. 1 to 6.

FIG. 7B simplified flowchart of a server-side event handling method 600 for enabling the flexible request-response cycle.

A server runs an application 200 that is accessed by a browser 201 running on a client 900. The client and the server are part of a computer system 999 and communicate using an asymmetric protocol. The server-side method 600 includes the following steps: a receiving step 610, a creating step 611, a generating step 612, a buffering step 614 and a sending step 620.

In the receiving step 620, the application 200 receives a request 300 from the browser 201. The request 300 comprises a browser component request 510 that originates in a first browser component BC1. The first browser component BC1 corresponds to a first application component AC1 of the application 200. Further, the application 200 has a second application component AC2 that corresponds to a second browser component BC2.

In the creating step 611, the first application component AC1 creates the first application component response 540 in response to the request 300.

In the generating step 612, the second application component AC2 generates a second application component response 550 in response to an event cascade that includes at least a server event 530 that is triggered by the first application component AC1 in response to the request 300.

In the buffering step 614, the application 200 stores the first application component response 540 and the second application component response 550 in a response queue 110 of the application 200.

In the sending step 620, the application 200 sends in response to the request 310 a server response 310 to the browser 201. The server response 310 includes the first application component response 540 that is applicable to the first browser component BC1 and the second application component response 550 that is applicable to the second browser component BC2.

One embodiment of the invention can be implemented by a computer program product that includes instructions that when loaded into a memory of the server 901 causes at least one processor of the server 901 to perform the steps of the server-side method 600. Thereby, the computer program can be implemented to support all server-side features that are described in FIGS. 1 to 6.

A further embodiment of the present invention can be implemented by using a computer system that has at least a client and a server, wherein each computer (the client and the server) has at least a memory and a processor. The computer system can communicate with further computer systems over a network ,(e.g., a wide area network (WAN), a local area network (LAN), the Internet.) A server computer program product that can be loaded into the memory of the server includes instructions that when executed by the processor causes the server to perform server-side steps according to the present invention. A client computer program product that can be loaded into the memory of the client includes instructions that when executed by the processor causes the client to perform client-side steps according to the present invention.

The invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM,EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

The invention has been described in terms of particular embodiments. Other embodiments are within the scope of the following claims. For example, the steps of the invention can be performed in a different order and still achieve desirable results.

## Claims

1. A method (400) for event handling on a client (901) in a computer system (999), wherein the client (901) runs a browser (201) to access an application (200) that is running on a server (900) of the computer system (999), the client (901) communicating with the server (900) over an asymmetric protocol, comprising the steps:
the browser (201) sending (410) a request (300) to the application (200), wherein the request (300) comprises a browser component request (510) that originates in a first browser component (BC1) and a further browser component request (520) which is generated at a further browser component (BC3) and which is buffered with the browser component request (510) in a request queue (111) and bundled with the browser component request (510) in the request (300), wherein the further browser component request (520) is generated in response to a client event (515) generated by the first browser component (BC1), wherein the client event (515) is part of a client event cascade that is triggered by a triggering action for the browser component request (510) and includes further client events that can affect further browser components; and
in response to the request (300), the browser (201) receiving (420) from the application (200) a server response (310), wherein a first application component response (540) that is directed to the first browser component (BC1), a second application component response (550) that is directed to a second browser component (BC2), and a further application component response (522) that is directed to the further browser component (BC3) and that is generated by a further application component (AC3) in response to the further browser component request (520) are buffered in a response queue (110) and bundled into the server response (310);
wherein the server (900) uses dependencies that are defined by the application (200) for launching a server event cascade and wherein the application (200) determines which of the browser components (BC1, BC2) are effected by the server event cascade and sends the corresponding application component responses (540, 550) to the browser (201).

2. The method (400) of claim 1, comprising the further step:
the browser (201) applying (430) the first application component response (540) and the second application component response (550) to the first browser component (BC1) and the second browser component (BC2), respectively.

3. The method (400) of claims 1 or 2, wherein the first browser component (BC1) and the second browser component (BC2) correspond to a first application component (AC1) and a second application component (AC2), respectively.

4. The method (400) of claim 3, wherein the browser component request (510) is directed to the first application component (AC1) and the first application component response (540) originates in the first application component (AC1) and the second application component response (550) originates in the second application component (AC2).

5. The method (400) of claim 4, wherein the second application component response (550) is generated by the second application component (AC2) in response to an event cascade that comprises at least a server event (530) that is triggered by the first application component (AC1) in response to the request (300).

6. A method (600) for event handling on a server (900) of a computer system (999), wherein the server (900) runs an application (200) that is accessed by a browser (201) running on a client (900) of the computer system (999), the client (901) communicating with the server (900) over an asymmetric protocol, comprising the steps:
the application (200) receiving (610) a request (300) from the browser (201), wherein the request (300) comprises a browser component request (510) that originates in a first browser component (BC1) and a further browser component request (520) which is generated at a further browser component (BC3) and which is buffered with the browser component request (510) in a request queue (111) and bundled with the browser component request (510) in the request (300), wherein the further browser component request (520) is generated in response to a client event (515) generated by the first browser component (BC1), wherein the client event (515) is part of a client event cascade that is triggered by a triggering action for the browser component request (510) and includes further client events that can affect further browser components; and
in response to the request (300), the application (200) sending (620) to the browser (201) a server response (310), wherein a first application component response (540) that is directed to the first browser component (BC1) and a second application component response (550) that is directed to a second browser component (BC2), and a further application component response (522) that is directed to the further browser component (BC3) and that is generated by a further application component (AC3) in response to the further browser component request (520) are buffered in a response queue (110) and bundled into the server response (310);
wherein the server (900) uses dependencies that are defined by the application (200) for launching a server event cascade and wherein the application (200) determines which of the browser components (BC1, BC2) are effected by the server event cascade and sends the corresponding application component responses (540, 550) to the browser (201).

7. The method (600) of claim 6, wherein the first browser component (BC1) and the second browser component (BC2) correspond to a first application component (AC1) and a second application component (AC2), respectively.

8. The method (600) of claim 7, wherein the browser component request (510) is directed to the first application component (AC1) and the first application component response (540) originates in the first application component (AC1) in response to the browser component request (510) and the second application component response (550) originates in the second application component (AC2).

9. The method (600) of claim 8, comprising the further steps:
the first application component (AC1) creating (611) the first application component response (540) in response to the request (300); and
the second application component (AC2) generating (612) the second application component response (550) in response to an event cascade that comprises at least a server event (530) that is triggered by the first application component (AC1) in response to the request (300).

10. The method (600) of claim 6, wherein in the sending step (620) the server response (310) comprises the further application component response (522) that is directed to the further browser component (BC3)

11. A client (901) comprising:
a browser (201) configured to perform a method as claimed in claim 1.

12. The client (901) of claim 11, wherein the browser (201) further applies (430) the first application component response (540) and the second application component response (550) to the first browser component (BC1) and the second browser component (BC2), respectively, and wherein the first browser component (BC1) and the second browser component (BC2) correspond to a first application component (AC1) and a second application component (AC2), respectively.

13. The client (901) of claim 12, wherein the browser component request (510) is directed to the first application component (AC1) and the first application component response (540) originates in the first application component (AC1) and the second application component response (550) originates in the second application component (AC2).

14. The client (901) of claim 11, further comprising:
a client event queue for buffering the client event (515); and
a client broker for retrieving the buffered client event (515) from the client event queue and for distributing the client event (515) to the further browser component (BC3).

15. A server (900) comprising:
an application (200) operable to perform a method as claimed in claim 6.

16. The server (900) of claim 15, wherein the first browser component (BC1) and the second browser component (BC2) correspond to a first application component (AC1) and a second application component (AC2), respectively, and wherein the browser component request (510) is directed to the first application component (AC1) and the first application component response (540) originates in the first application component (AC1) in response to the browser component request (510) and the second application component response (550) originates in the second application component (AC2).

17. The server (900) of claim 16, wherein the first application component (AC1) creates (611) the first application component response (540) in response to the request (300); and the second application component (AC2) generates (612) the second application component response (550) in response to an event cascade that comprises at least one server event (530) that is triggered by the first application component (AC1) in response to the request (300).

18. The server (900) of claim 15, further comprising:
a server event queue for buffering the at least one server event (530) of the event cascade; and
a server broker for retrieving the at least one server event (530) from the server event queue and for distributing the at least one server event (530) to the second application component (AC2).

19. A computer program product comprising instructions that when loaded into a memory of a client (901) cause at least one processor of the client (901) to perform the steps according to any one of the claims 1 to 5.

20. A computer program product comprising instructions that when loaded into a memory of a server (900) cause at least one processor of the server (900) to perform the steps according to any one of the claims 6 to 10.

## Patentansprüche

1. Ein Verfahren (400) zur Ereignisbehandlung auf einem Client (901) in einem Computersystem (999), wobei der Client (901) einen Browser (201) ausführt, um auf eine Anwendung (200) zuzugreifen, die auf einem Server (900) des Computersystems (999) ausgeführt wird, wobei der Client (901) mit dem Server (900) über ein asymmetrisches Protokoll kommuniziert, das die folgenden Schritte umfasst:
der Browser (201) sendet (410) eine Anforderung (300) an die Anwendung (200), wobei die Anforderung (300) eine Browserkomponentenanforderung (510), die von einer ersten Browserkomponente (BC1) ausgeht, und eine weitere Browserkomponentenanforderung (520) umfasst, die bei einer weiteren Browserkomponente (BC3) erzeugt wird und die mit der Browserkomponentenanforderung (510) in einer Anforderungswarteschlange (111) gepuffert und mit der Browserkomponentenanforderung (510) in der Anforderung (300) gebündelt ist, wobei die weitere Browserkomponentenanforderung (520) als Reaktion auf ein Client-Ereignis (515) erzeugt wird, das von der ersten Browserkomponente (BC1) erzeugt wird, wobei das Client-Ereignis (515) Teil einer Client-Ereigniskaskade ist, die durch eine auslösende Aktion für die Browserkomponentenanforderung (510) ausgelöst wird und weitere Client-Ereignisse beinhaltet, die weitere Browserkomponenten betreffen können; und
als Reaktion auf die Anforderung (300) empfängt (420) der Browser (201) von der Anwendung (200) eine Serverantwort (310), wobei eine erste Anwendungskomponentenantwort (540), die auf die erste Browserkomponente (BC1) gerichtet ist, eine zweite Anwendungskomponentenantwort (550), die auf eine zweite Browserkomponente (BC2) gerichtet ist, und eine weitere Anwendungskomponentenantwort (522), die auf die weitere Browserkomponente (BC3) gerichtet ist und die von einer weiteren Anwendungskomponente (AC3) als Reaktion auf die weitere Browserkomponentenanforderung (520) erzeugt wird, in einer Antwortwarteschlange (110) gepuffert und in der Serverantwort (310) gebündelt werden;
wobei der Server (900) Abhängigkeiten verwendet, die durch die Anwendung (200) definiert sind, um eine Server-Ereigniskaskade zu starten, und wobei die Anwendung (200) bestimmt, welche der Browserkomponenten (BC1, BC2) durch die Server-Ereigniskaskade beeinflusst werden, und die entsprechenden Anwendungskomponentenantworten (540, 550) an den Browser (201) sendet.

2. Das Verfahren (400) nach Anspruch 1, das den weiteren Schritt umfasst: der Browser (201) wendet (430) die erste Anwendungskomponentenantwort (540) und die zweite Anwendungskomponentenantwort (550) jeweils auf die erste Browserkomponente (BC1) und auf die zweite Browserkomponente (BC2) an.

3. Das Verfahren (400) nach Anspruch 1 oder 2, wobei die erste Browserkomponente (BC1) und die zweite Browserkomponente (BC2) jeweils einer ersten Anwendungskomponente (AC1) und einer zweiten Anwendungskomponente (AC2) entsprechen.

4. Das Verfahren (400) nach Anspruch 3, wobei die Browserkomponentenanforderung (510) auf die erste Anwendungskomponente (AC1) gerichtet ist und die erste Anwendungskomponentenantwort (540) ihren Ursprung in der ersten Anwendungskomponente (AC1) hat und die zweite Anwendungskomponentenantwort (550) ihren Ursprung in der zweiten Anwendungskomponente (AC2) hat.

5. Das Verfahren (400) nach Anspruch 4, wobei die zweite Anwendungskomponentenantwort (550) durch die zweite Anwendungskomponente (AC2) erzeugt wird als Reaktion auf eine Ereigniskaskade, die mindestens ein Serverereignis (530) umfasst, das von der ersten Anwendungskomponente (AC1) als Reaktion auf die Anforderung (300) ausgelöst wird.

6. Ein Verfahren (600) zur Ereignisbehandlung auf einem Server (900) eines Computersystems (999), wobei der Server (900) eine Anwendung (200) ausführt, auf die von einem Browser (201) zugegriffen wird, der auf einem Client (900) des Computersystems (999) ausgeführt wird, wobei der Client (901) über ein asymmetrisches Protokoll mit dem Server (900) kommuniziert, das die folgenden Schritte umfasst:
die Anwendung (200) empfängt (610) eine Anforderung (300) vom Browser (201), wobei die Anforderung (300) eine Browserkomponentenanforderung (510), die von einer ersten Browserkomponente (BC1) ausgeht, und eine weitere Browserkomponentenanforderung (520) umfasst, die bei einer weiteren Browserkomponente (BC3) erzeugt wird und die mit der Browserkomponentenanforderung (510) in einer Anforderungswarteschlange (111) gepuffert und mit der Browserkomponentenanforderung (510) in der Anforderung (300) gebündelt ist, wobei die weitere Browserkomponentenanforderung (520) als Reaktion auf ein von der ersten Browserkomponente (BC1) erzeugtes Client-Ereignis (515) erzeugt wird, wobei das Client-Ereignis (515) Teil einer Client-Ereigniskaskade ist, die durch eine auslösende Aktion für die Browserkomponentenanforderung (510) ausgelöst wird und weitere Client-Ereignisse beinhaltet, die weitere Browserkomponenten betreffen können; und
als Reaktion auf die Anforderung (300) sendet (620) die Anwendung (200) eine Serverantwort (310) an den Browser (201), wobei eine erste Anwendungskomponentenantwort (540), die auf die erste Browser-Komponente (BC1) gerichtet ist, und eine zweite Anwendungskomponentenantwort (550), die auf eine zweite Browser-Komponente (BC2) gerichtet ist, und eine weitere Anwendungskomponentenantwort (522), die auf die weitere Browserkomponente (BC3) gerichtet ist und die von einer weiteren Anwendungskomponente (AC3) als Reaktion auf die weitere Browserkomponentenanforderung (520) erzeugt wird, in einer Antwortwarteschlange (110) gepuffert und in der Serverantwort (310) gebündelt werden;
wobei der Server (900) Abhängigkeiten verwendet, die durch die Anwendung (200) definiert sind, um eine Server-Ereigniskaskade zu starten, und wobei die Anwendung (200) bestimmt, welche der Browserkomponenten (BC1, BC2) durch die Server-Ereigniskaskade beeinflusst werden, und die entsprechenden Anwendungskomponentenantworten (540, 550) an den Browser (201) sendet.

7. Das Verfahren (600) nach Anspruch 6, wobei die erste Browserkomponente (BC1) und die zweite Browserkomponente (BC2) jeweils einer ersten Anwendungskomponente (AC1) und einer zweiten Anwendungskomponente (AC2) entsprechen.

8. Das Verfahren (600) nach Anspruch 7, wobei die Browserkomponentenanforderung (510) auf die erste Anwendungskomponente (AC1) gerichtet ist und die erste Anwendungskomponentenantwort (540) ihren Ursprung in der ersten Anwendungskomponente (AC1) hat als Reaktion auf die Browserkomponentenanforderung (510) und die zweite Anwendungskomponentenantwort (550) ihren Ursprung in der zweiten Anwendungskomponente (AC2) hat.

9. Das Verfahren (600) nach Anspruch 8, das die weiteren Schritte umfasst:
die erste Anwendungskomponente (AC1) erzeugt (611) die erste Anwendungskomponentenantwort (540) als Reaktion auf die Anforderung (300); und
die zweite Anwendungskomponente (AC2) generiert (612) die zweite Anwendungskomponentenantwort (550) als Reaktion auf eine Ereigniskaskade, die mindestens ein Serverereignis (530) umfasst, das von der ersten Anwendungskomponente (AC1) als Reaktion auf die Anforderung (300) ausgelöst wird.

10. Das Verfahren (600) nach Anspruch 6, wobei in dem Sendeschritt (620) die Serverantwort (310) die weitere Anwendungskomponentenantwort (522) umfasst, die auf die weitere Browser-Komponente (BC3) gerichtet ist.

11. Ein Client (901), der Folgendes umfasst:
einen Browser (201), der konfiguriert ist, um ein Verfahren nach Anspruch 1 durchzuführen.

12. Der Client (901) nach Anspruch 11, wobei der Browser (201) ferner die erste Anwendungskomponentenantwort (540) und die zweite Anwendungskomponentenantwort (550) jeweils auf die erste Browserkomponente (BC1) und die zweite Browserkomponente (BC2) anwendet (430), und wobei die erste Browserkomponente (BC1) und die zweite Browserkomponente (BC2) jeweils einer ersten Anwendungskomponente (AC1) und einer zweiten Anwendungskomponente (AC2) entsprechen.

13. Der Client (901) nach Anspruch 12, wobei die Browserkomponentenanforderung (510) auf die erste Anwendungskomponente (AC1) gerichtet ist und die erste Anwendungskomponentenantwort (540) ihren Ursprung in der ersten Anwendungskomponente (AC1) hat und die zweite Anwendungskomponentenantwort (550) ihren Ursprung in der zweiten Anwendungskomponente (AC2) hat.

14. Der Client (901) nach Anspruch 11, der ferner Folgendes umfasst:
eine Client-Ereigniswarteschlange zum Puffern des Client-Ereignisses (515); und
einen Client-Broker zum Abrufen des gepufferten Client-Ereignisses (515) aus der Client-Ereigniswarteschlange und zum Verteilen des Client-Ereignisses (515) an die weitere Browser-Komponente (BC3).

15. Ein Server (900), der Folgendes umfasst:
eine Anwendung (200), die betreibbar ist, um ein Verfahren nach Anspruch 6 durchzuführen.

16. Der Server (900) nach Anspruch 15, wobei die erste Browserkomponente (BC1) und die zweite Browserkomponente (BC2) jeweils einer ersten Anwendungskomponente (AC1) und einer zweiten Anwendungskomponente (AC2) entsprechen und wobei die Browserkomponentenanforderung (510) auf die erste Anwendungskomponente (AC1) gerichtet ist und die erste Anwendungskomponentenantwort (540) ihren Ursprung in der ersten Anwendungskomponente (AC1) hat als Reaktion auf die Browserkomponentenanforderung (510) und die zweite Anwendungskomponentenantwort (550) ihren Ursprung in der zweiten Anwendungskomponente (AC2) hat.

17. Der Server (900) nach Anspruch 16, wobei die erste Anwendungskomponente (AC1) die erste Anwendungskomponentenantwort (540) als Reaktion auf die Anforderung (300) erzeugt (611); und wobei die zweite Anwendungskomponente (AC2) die zweite Anwendungskomponentenantwort (550) als Reaktion auf eine Ereigniskaskade generiert (612), die mindestens ein Serverereignis (530) umfasst, das von der ersten Anwendungskomponente (AC1) als Reaktion auf die Anforderung (300) ausgelöst wird.

18. Der Server (900) nach Anspruch 15, der ferner Folgendes umfasst:
eine Server-Ereigniswarteschlange zum Puffern des mindestens einen Serverereignisses (530) der Ereigniskaskade; und
einen Server-Broker zum Abrufen des mindestens einen Serverereignisses (530) aus der Server-Ereigniswarteschlange und zum Verteilen des mindestens einen Serverereignisses (530) an die zweite Anwendungskomponente (AC2).

19. Ein Computerprogrammprodukt, das Anweisungen umfasst, die, wenn sie in einen Speicher eines Clients (901) geladen werden, mindestens einen Prozessor des Clients (901) dazu veranlassen, die Schritte nach irgendeinem der Ansprüche von 1 bis 5 auszuführen.

20. Ein Computerprogrammprodukt, das Anweisungen umfasst, die, wenn sie in einen Speicher eines Servers (900) geladen werden, mindestens einen Prozessor des Servers (900) dazu veranlassen, die Schritte nach irgendeinem der Ansprüche von 6 bis 10 auszuführen.

## Revendications

1. Un procédé (400) de traitement d'événements sur un dispositif client (901) dans un système informatique (999), sachant que le dispositif client (901) exécute un navigateur (201) pour accéder à une application (200) qui fonctionne sur un dispositif serveur (900) du système informatique (999), le dispositif client (901) communiquant avec le dispositif serveur (900) via un protocole asymétrique, comprenant les étapes suivantes :
le navigateur (201) envoie (410) une requête (300) à l'application (200), sachant que la requête (300) comprend une requête de composant de navigateur (510) qui provient d'un premier composant de navigateur (BC1), et une requête de composant de navigateur supplémentaire (520) qui est générée au niveau d'un autre composant de navigateur (BC3) et qui est mise en tampon avec la requête de composant de navigateur (510) dans une file de requêtes (111) et qui est regroupée avec la requête de composant de navigateur (510) dans la requête (300), sachant que la requête de composant de navigateur supplémentaire (520) est générée en réponse à un événement client (515) généré par le premier composant de navigateur (BC1), sachant que l'événement client (515) fait partie d'une cascade d'événements client qui est déclenchée par une action de déclenchement pour la requête de composant de navigateur (510) et inclut des événements client supplémentaires qui peuvent affecter des composants de navigateur supplémentaires ; et
en réponse à la requête (300), le navigateur (201) reçoit (420) de la part de l'application (200) une réponse de serveur (310), sachant qu'une première réponse de composant d'application (540) qui est dirigée vers le premier composant de navigateur (BC1), une deuxième réponse de composant d'application (550) qui est dirigée vers un deuxième composant de navigateur (BC2), et une réponse de composant d'application supplémentaire (522) qui est dirigée vers le composant de navigateur supplémentaire (BC3) et qui est générée par un autre composant d'application (AC3) en réponse à la requête de composant de navigateur supplémentaire (520) sont mises en mémoire tampon dans une file de réponse (110) et regroupées dans la réponse de serveur (310) ;
sachant que le dispositif serveur (900) utilise des dépendances qui sont définies par l'application (200) pour lancer une cascade d'événements de serveur et sachant que l'application (200) détermine lesquels des composants de navigateur (BC1, BC2) sont affectés par la cascade d'événements de serveur, et envoie les réponses de composant d'application (540, 550) correspondantes au navigateur (201).

2. Le procédé (400) d'après la revendication 1, comprenant l'étape supplémentaire suivante :
le navigateur (201) applique (430) la première réponse de composant d'application (540) et la deuxième réponse de composant d'application (550) respectivement au premier composant de navigateur (BC1) et au deuxième composant de navigateur (BC2).

3. Le procédé (400) d'après les revendications 1 ou 2, sachant que le premier composant de navigateur (BC1) et le deuxième composant de navigateur (BC2) correspondent respectivement à une premier composant d'application (AC1) et à un deuxième composant d'application (AC2).

4. Le procédé (400) d'après la revendication 3, sachant que la requête de composant de navigateur (510) est dirigée vers le premier composant d'application (AC1) et que la première réponse de composant d'application (540) provient du premier composant d'application (AC1) et que la deuxième réponse de composant d'application (550) provient du deuxième composant d'application (AC2).

5. Le procédé (400) d'après la revendication 4, sachant que la deuxième réponse de composant d'application (550) est générée par le deuxième composant d'application (AC2) en réponse à une cascade d'événements qui comprend au moins un événement de serveur (530) qui est déclenché par le premier composant d'application (AC1) en réponse à la requête (300).

6. Un procédé (600) de traitement d'événements sur un dispositif serveur (900) d'un système informatique (999), sachant que le dispositif serveur (900) exécute une application (200) qui est accessible par un navigateur (201) fonctionnant sur un dispositif client (900) du système informatique (999), le dispositif client (901) communiquant avec le dispositif serveur (900) conformément à un protocole asymétrique, comprenant les étapes suivantes :
l'application (200) reçoit (610) une requête (300) de la part du navigateur (201), sachant que la requête (300) comprend une requête de composant de navigateur (510) qui provient d'un premier composant de navigateur (BC1) et une requête de composant de navigateur supplémentaire (520) qui est générée sur un composant de navigateur supplémentaire (BC3) et qui est mise en tampon avec la requête de composant de navigateur (510) dans une file de requêtes (111) et qui est regroupée avec la requête de composant de navigateur (510) dans la requête (300), sachant que la requête de composant de navigateur supplémentaire (520) est générée en réponse à un événement de client (515) généré par le premier composant de navigateur (BC1), sachant que l'événement de client (515) fait partie d'une cascade d'événements de client qui est déclenchée par une action de déclenchement pour la requête de composant de navigateur (510) et inclut des événements de client supplémentaires qui peuvent affecter des composants de navigateur supplémentaires ; et
en réponse à la requête (300), l'application (200) envoie (620) au navigateur (201) une réponse de serveur (310), sachant qu'une première réponse de composant d'application (540) qui est dirigée vers le premier composant de navigateur (BC1) et une deuxième réponse de composant d'application (550) qui est dirigée vers un deuxième composant de navigateur (BC2), et une réponse de composant d'application supplémentaire (522) qui est dirigée vers le composant de navigateur supplémentaire (BC3) et qui est générée par un autre composant d'application (AC3) en réponse à la requête de composant de navigateur supplémentaire (520) sont mises en mémoire tampon dans une file de réponse (110) et regroupées dans la réponse de serveur (310) ;
sachant que le dispositif serveur (900) utilise des dépendances qui sont définies par l'application (200) pour lancer une cascade d'événements de serveur et sachant que l'application (200) détermine lesquels des composants de navigateur (BC1, BC2) sont affectés par la cascade d'événements de serveur et envoie les réponses de composant d'application (540, 550) correspondantes au navigateur (201).

7. Le procédé (600) d'après la revendication 6, sachant que le premier composant de navigateur (BC1) et le deuxième composant de navigateur (BC2) correspondent respectivement à un premier composant d'application (AC1) et à un deuxième composant d'application (AC2).

8. Le procédé (600) d'après la revendication 7, sachant que la requête de composant de navigateur (510) est dirigée vers le premier composant d'application (AC1) et que la première réponse de composant d'application (540) provient du premier composant d'application (AC1) en réponse à la requête de composant de navigateur (510) et que la deuxième réponse de composant d'application (550) provient du deuxième composant d'application (AC2).

9. Le procédé (600) d'après la revendication 8, comprenant en outre les étapes suivantes :
le premier composant d'application (AC1) crée (611) la première réponse de composant d'application (540) en réponse à la requête (300) ; et
le deuxième composant d'application (AC2) génère (612) la deuxième réponse de composant d'application (550) en réponse à une cascade d'événements qui comprend au moins un événement de serveur (530) qui est déclenché par le premier composant d'application (AC1) en réponse à la requête (300).

10. Le procédé (600) d'après la revendication 6, sachant que, dans l'étape d'envoi (620), la réponse de serveur (310) comprend la réponse de composant d'application supplémentaire (522) qui est dirigée vers le composant navigateur supplémentaire (BC3).

11. Un dispositif client (901) comprenant :
un navigateur (201) configuré pour exécuter un procédé d'après la revendication 1.

12. Le dispositif client (901) d'après la revendication 11, sachant que le navigateur (201) applique (430) en outre la première réponse de composant d'application (540) et la deuxième réponse de composant d'application (550) respectivement au premier composant de navigateur (BC1) et au deuxième composant de navigateur (BC2), et sachant que le premier composant de navigateur (BC1) et le deuxième composant de navigateur (BC2) correspondent respectivement à un premier composant d'application (AC1) et à un deuxième composant d'application (AC2).

13. Le dispositif client (901) d'après la revendication 12, sachant que la requête de composant de navigateur (510) est dirigée vers le premier composant d'application (AC1) et que la première réponse de composant d'application (540) provient du premier composant d'application (AC1) et que la deuxième réponse de composant d'application (550) provient du deuxième composant d'application (AC2).

14. Le dispositif client (901) d'après la revendication 11, comprenant en outre :
une file d'attente d'événements de client pour la mise en mémoire tampon de l'événement de client (515) ; et
un courtier client (*client broker*) pour récupérer l'événement de client tamponné (515) depuis la file d'attente d'événements de client et pour distribuer l'événement de client (515) au composant de navigateur supplémentaire (BC3).

15. Un dispositif serveur (900) comprenant :
une application (200) utilisable pour exécuter un procédé d'après la revendication 6.

16. Le dispositif serveur (900) d'après la revendication 15, sachant que le premier composant de navigateur (BC1) et le deuxième composant de navigateur (BC2) correspondent respectivement à un premier composant d'application (AC1) et un deuxième composant d'application (AC2), et sachant que la requête de composant de navigateur (510) est dirigée vers le premier composant d'application (AC1) et que la première réponse de composant d'application (540) provient du premier composant d'application (AC1) en réponse à la requête de composant de navigateur (510) et que la deuxième réponse de composant d'application (550) provient du deuxième composant d'application (AC2).

17. Le dispositif serveur (900) d'après la revendication 16, sachant que le premier composant d'application (AC1) crée (611) la première réponse de composant d'application (540) en réponse à la requête (300) ; et que le deuxième composant d'application (AC2) génère (612) la deuxième réponse de composant d'application (550) en réponse à une cascade d'événements qui comprend au moins un événement de serveur (530) qui est déclenché par le premier composant d'application (AC1) en réponse à la requête (300).

18. Le dispositif serveur (900) d'après la revendication 15, comprenant en outre :
une file d'attente d'événements de serveur pour mettre en mémoire tampon l'au moins un événement de serveur (530) de la cascade d'événements ; et
un courtier serveur (*server broker*) pour récupérer l'au moins un événement de serveur (530) de la file d'attente d'événements de serveur et pour distribuer l'au moins un événement de serveur (530) au deuxième composant d'application (AC2).

19. Un produit programme informatique comprenant des instructions qui, lorsqu'elles sont chargées dans la mémoire d'un dispositif client (901), amènent au moins un processeur du dispositif client (901) à effectuer les étapes d'après l'une quelconque des revendications de 1 à 5.

20. Un produit programme informatique comprenant des instructions qui, lorsqu'elles sont chargées dans une mémoire d'un dispositif serveur (900), amènent au moins un processeur du dispositif serveur (900) à exécuter les étapes d'après l'une quelconque des revendications de 6 à 10.
